# EUROPÄISCHE PATENTSCHRIFT

(11) **EP 3 330 319 B1**
(45) Veröffentlichungstag und Bekanntmachung des Hinweises auf die Patenterteilung: **26.08.2020**
(21) Anmeldenummer: 17203298.9
(22) Anmeldetag: 23.11.2017
(51) Int. Cl.: C08L 77/02, C08L 77/06, C08G 69/14, C08G 69/26

(54) **POLYAMID-FORMMASSEN MIT GERINGER RELATIVER PERMITTIVITÄT**
POLYAMIDE MOULDING COMPOUNDS WITH LOW RELATIVE PERMITTIVITY
MASSES DE FORMAGE EN POLYAMIDE AVEC PERMITTIVITÉ RELATIVEMENT RESTREINTE

(30) Priorität: 02.12.2016 EP 16201945
(43) Veröffentlichungstag der Anmeldung: 06.06.2018
(73) Patentinhaber: EMS-Patent AG, 7013 Domat/Ems (CH)
(72) Erfinder: Stöppelmann, Georg, 7402 Bonaduz (CH); Harder, Philipp, 7000 Chur (CH); Aepli, Etienne, 7013 Domat/Ems (CH); Ebling, Ronny, 7013 Domat/Ems (CH)
(74) Vertreter: Pfenning, Meinig & Partner mbB

(56) Entgegenhaltungen:
- EP-A1- 1 942 147
- EP-A1- 2 703 436
- US-A1- 2003 054 936
- Saint-Gobain Vetrotex: "E, R and D glass properties - Technical data sheet", , 1. März 2002 (2002-03-01), Seiten 1-2, XP055459368, Gefunden im Internet: URL:http://glassproperties.com/glasses/E_R _and_D_glass_properties.pdf [gefunden am 2018-03-14]

## Beschreibung

Die vorliegende Erfindung betrifft Polyamid-Formmassen mit geringer relativer Permittivität sowie Formkörper aus diesen Polyamid-Formmassen und deren Verwendungen.

Die geringe relative Permittivität der Polyamid-Formmassen erlaubt es diese für Gehäuse, Gehäuseteile oder sonstige Komponenten von über elektromagnetischen Wellen mit einer Frequenz von 0,3 bis 300 GHz kommunizierenden Geräten einzusetzen, ohne, dass eine signifikante Beeinträchtigung der Sende- und Empfangseigenschaften dieser Geräte hinzunehmen ist. Über solche elektromagnetischen Wellen kommunizierende Geräte finden in unterschiedlichen Bereichen Anwendung, so beispielsweise in der Telekommunikation, Unterhaltungselektronik oder im Haushalt, insbesondere Sende- und Empfangsgeräte, Mobiltelefone, Tabletts, Laptops, Navigationsgeräte, Überwachungskameras, Fotokameras, Sensoren, Tauchcomputer, Audioanlagen, Fernbedienungen, Lautsprecher, Kopfhörer, Radiogeräte, Fernsehgeräte, Küchengeräte, Tür- oder Toröffner, Bediengeräte für die Zentralverriegelung bei Fahrzeugen, Keyless-go-Fahrzeugschlüssel, Temperaturmess- bzw. Temperaturanzeigegeräte, Messgeräte und Steuergeräte.

Aus dem Stand der Technik sind bereits Polyamid-Formmassen bekannt die eine geringe relative Permittivität, früher als dielektrische Konstante bezeichnet, aufweisen.

JP 2010-168502 A beschreibt Polyamide mit einer geringen dielektrischen Konstante, geringer Wasseraufnahme und guter Löslichkeit in einem Lösungsmittel. Diese Polyamide enthalten ein Polymer mit Wiederholungseinheiten eines Polyamids erhalten aus der Reaktion eines Diamins, welches aromatischen Aminogruppen an beiden Enden eines speziellen bifunktionellen Phenylenetheroligomers aufweist, mit einer Dicarbonsäure oder einem Dicarbonsäurehalogenid oder einem Copolymer mit einer Polyamid-Wiederholungseinheit erhalten aus der Reaktion eines Diamins, welches aromatische Aminogruppen an beiden Enden eines speziellen bifunktionellen Phenlyenetheroligomers aufweist, oder einem weiteren Diamin mit einer Dicarbonsäure oder einem Dicarbonsäurehalogenid.

JP05-274914 A betrifft isolierende Materialien aus einem Polyamidharz mit geringer Dielektrizitätskonstante. Diese Materialien finden Anwendung in elektronischen Bauteilen, wie Steckschalttafeln und Multi-Chip-Modulen.

Aus der EP 2 703 436 sind thermoplastische mit Glasfasern verstärkte Polyamid-Formmassen mit verbesserten mechanischen Eigenschaften bekannt. Diese werden beispielsweise in Bauteilen mit elektrischen Leiterbahnen eingesetzt.

Polyamid-Formmassen für die eingangs genannten Anwendungen werden standardmäßig über Spritzgussverfahren verarbeitet. Neben einer geringen relativen Permittivität stellt deshalb das Spritzschwund- und Verzugsverhalten der Polyamid-Formmassen eine wichtige Eigenschaft dar. Weiterhin sollten Polyamid-Formmassen die z.B. im Bereich der Telekommunikationsgeräte verwendet werden schmutzabweisend sein und gute mechanische Eigenschaften zeigen. Letztere lassen sich über die Einarbeitung von Verstärkungsmaterialien wie Glasfasern in die Polyamid-Formmassen erreichen, welche aber wiederum eine negative Wirkung auf die relative Permittivität der Polyamid-Formmassen ausüben.

Ausgehend davon bestand eine Aufgabe der vorliegenden Erfindung darin

Polyamid-Formmassen bereitzustellen, die neben einer geringen relativen Permittivität auch gut über Spritzgussverfahren verarbeitbar sind und insbesondere ein gutes Spritzschwund- und Verzugsverhalten aufweisen. Weiterhin sollen die Polyamid-Formmassen gute mechanische Eigenschaften, insbesondere eine gute Bindenahtfestigkeit, aufweisen und schmutzabweisend sein. Diese Aufgabe wird durch die Polyamid-Formmassen gemäß Anspruch 1 gelöst, welche die folgenden Komponenten enthalten:
(A) 25 bis 80 Gew.-% einer Mischung aus
   Aa) 50,1 bis 90 Gew.-% mindestens eines teilkristallinen, aliphatischen Polyamids ausgewählt aus der Gruppe bestehend aus PA 10, PA 11, PA 12, PA 516, PA 610, PA 612, PA 614, PA 616, PA 618, PA 1010, PA 1012, PA 1014, PA 1016, PA 1018 und Mischungen daraus, und
   Ab) 10 bis 49,9 Gew.-% mindestens eines amorphen oder mikrokristallinen Polyamids,
   wobei sich die Anteile der Komponenten Aa) und Ab) zu 100 Gew.-% addieren und wobei die Mischung der Komponenten Aa) und Ab) durchschnittlich mindestens 5,7 nicht an der Amidgruppe beteiligter C-Atome pro Amidgruppe in der Mischung (A) aufweist,
(B) 20 bis 65 Gew.-% zumindest eines Glasfüllstoffs, bestehend aus Glas mit einem Gehalt an Alkalioxiden und Erdalkalioxiden von 0 bis 12 Gew.-%, bezogen auf die Zusammensetzung des Glases, ausgewählt aus einer Gruppe bestehend aus Fasern, gemahlenen Fasern, Partikeln, Flakes, Kugeln und Mischungen davon
   und
(C) 0 bis 10 Gew.-% Zusatzstoffe,
   wobei die Summe der Komponenten (A), (B) und (C) 100 Gew.-% ergibt und wobei
   die Polyamid-Formmasse eine relative Permittivität von nicht mehr als 3,5 bei 2,45 GHz aufweist, wobei die Messung der relativen Permittivität εᵣ nach IEC 61189-Z-721(2015) an 80 x 80 x 3 mm Platten bei 23°C erfolgte.

Die abhängigen Patentsprüche 2 bis 13 betreffen vorteilhafte Ausführungsformen der erfindungsgemäßen Polyamid-Formmassen.

Außerdem werden gemäß Patentanspruch 14 Formkörper aus der erfindungsgemäßen Polyamid-Formmasse bereitgestellt und die Patentansprüche 15 und 16 betreffen spezielle Formkörper.

Unter guten mechanischen Eigenschaften der erfindungsgemässen Polyamid-Formmasse wird neben der Bindenahtfestigkeit folgendes verstanden:
Ein Zug-E-Modul von mindestens 8000 MPa, bevorzugt mindestens 10000 MPa, besonders bevorzugt von mindestens 12000 MPa, und/oder
eine Reissfestigkeit von mindestens 100 MPa, bevorzugt mindestens 120 MPa, besonders bevorzugt von mindestens 140 MPa, und/oder eine Reissdehnung von mindestens 1,5 %, bevorzugt mindestens 2,0 %, besonders bevorzugt von mindestens 2,5 %, und/oder
eine Schlagzähigkeit von mindestens 40 kJ/m², bevorzugt mindestens 50 kJ/m², besonders bevorzugt von mindestens 60 kJ/m², ganz besonders bevorzugt von mindestens 70 kJ/m², und/oder
eine Kerbschlagzähigkeit von mindestens 8 kJ/m², bevorzugt mindestens 10 kJ/m², besonders bevorzugt von mindestens 15 kJ/m².

### C-Atome pro Amidgruppe

Bei AB-Polyamiden ist die Anzahl der C-Atome zwischen dem Stickstoffatom und der Carbonylgruppe gleich der Anzahl der C-Atome pro Amidgruppe. Ein Beispiel für AB-Polyamide ist Polyamid 12, welches aus Laurinlactam hergestellt wird. Die Anzahl der C-Atome zwischen dem Stickstoffatom und der Carbonylgruppe beträgt hier 11.

Bei AABB-Polyamiden hergestellt aus Diaminen und Dicarbonsäuren ergibt sich die Anzahl der C-Atome pro Amidgruppe aus der Summe der C-Atome (C_{DA}) zwischen den beiden Stickstoffatomen des Diamins und den C-Atomen (C_{DS}) zwischen den beiden Carboxygruppen der Dicarbonsäure geteilt durch 2, also (C_{DA} + C_{DS})/2. Die Division durch 2 ist nötig, da aus den beiden Stickstoffen und den beiden Carboxygruppen zwei Amidgruppen gebildet werden können. Ein Beispiel für AABB-Polyamide ist das Polyamid MACM12 hergestellt aus Bis(3-methyl-4-amino-cyclohexyl)-methan (MACM) und Dodecandisäure. Da MACM 15 C-Atome zwischen den beiden Stickstoffen besitzt und Dodecandisäure 10 C-Atome zwischen den beiden Carboxygruppen, ergeben sich (15 + 10)/2 = 12,5 C-Atome pro Amidgruppe.

Die Mischungen aus den Polyamiden Aa) und Ab) (= Komponente (A) der Polyamid-Formmassen) weisen eine durchschnittliche Anzahl von nicht an der Amidgruppe beteiligten C-Atomen pro Amidgruppe von mindestens 5,7 auf. Diese Anzahl von C-Atomen von mindestens 5,7 bezieht sich dabei auf den Durchschnitt aller Polyamide gemäß Aa) und Ab) in der Mischung, wobei die Gewichtsverhältnisse der Polyamide in der Mischung zu berücksichtigen sind.

### Amorphe bzw. mikrokristalline Polyamide

Amorphe oder mikrokristalline Polyamide zeigen in der dynamischen Differenz-Kalorimetrie (engl. Differential Scanning Calorimetry, DSC) nach ISO 11357-2 (2013) bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Bei den für die erfindungsgemäße Polyamid-Formmasse verwendeten mikrokristallinen Polyamiden beträgt der Schmelzpunkt gemessen nach ISO 11357-3 (2013) bevorzugt maximal 255 °C.

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357-2 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen aufgrund ihrer Amorphizität keinen Schmelzpunkt.

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1 (2011, (D)) festgelegten. Die darin verwendeten Abkürzungen werden im folgenden Synonym zu den IUPAC Namen der Monomere verwendet, insbesondere kommen folgende Abkürzungen für Monomere vor MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-dimethylcyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5).

### Mengenangaben

Die Polyamid-Formmassen gemäß der vorliegenden Erfindung enthalten die Komponenten (A) bis (C), es gilt dabei die Maßgabe, dass sich die Komponenten (A) bis (C) in Summe auf 100 Gew.-% ergänzen. Die festgelegten Bereiche der Mengenangaben für die einzelnen Komponenten (A) bis (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

### Relative Permittivität

Die "Permittivität" (ε) ist ein Indikator für das Verhalten der Moleküle beim Einbringen in einem elektrisches Feld. Sie ist mit der "relativen Permittivität" (εᵣ) und der "Permittivität des Vakuums" (ε₀) über die Beziehung ε = εᵣ · ε₀ verknüpft. Die "relative Permittivität" (εᵣ) stellt eine stoffabhängige Größe dar und ist der Quotient aus der "Permittivität" (ε) und der "Permittivität des Vakuums" (ε₀). Neben der Art des Stoffes hängt die "relative Permittivität" (εᵣ) auch von der Frequenz des elektrischen Feldes und der Temperatur ab. Die relative Permittivität wird vorzugsweise nach IEC 61189-2-721 (2015) bestimmt.

### Polyamid-Formmasse

Gemäß einer bevorzugten Ausführungsform der vorliegenden Erfindung beträgt der Verzug der Polyamid-Formmasse nicht mehr als 0,5 %, bevorzugt nicht mehr als 0,4 % und besonders bevorzugt nicht mehr als 0,3 %. Der Verzug wird dabei vorzugsweise nach ISO 294-3 (2002) bestimmt.

Nach einer anderen bevorzugten Ausführungsform der vorliegenden Erfindung weist die Mischung der Komponenten Aa) und Ab) mindestens 6,5, bevorzugt 8,5 und besonders bevorzugt 10,0 nicht an der Amidgruppe beteiligter C-Atome auf.

Eine weitere bevorzugte Ausführungsform der vorliegenden Erfindung sieht vor, dass das mindestens eine teilkristalline, aliphatische Polyamid Aa) bevorzugt ausgewählt ist aus der Gruppe bestehend aus PA 10, PA 11, PA 12, PA 516, PA 612, PA 616, PA 1012, PA 1016 und deren Mischungen.

Gemäß einer bevorzugten Ausführungsform der vorliegenden Erfindung ist das mindestens eine amorphe oder mikrokristalline Polyamid Ab) ausgewählt aus der Gruppe bestehend aus PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18 und Mischungen daraus, wobei PA 6I/6T, PA MACM12, PA MACM14, PA TMDC12, PA TMDC14, PA MACMI/12, PA 6I/6T/MACMI/MACMT, PA MACMI/MACMT/12, PA MACMI/ MACMT/MACM12, PA 6I/6T/MACMI/MACMT/12, PA MACM10/10, PA MACM12/PACM12, PA MACM14/PACM14, PA MACM18/PACM18 und Mischungen daraus bevorzugt sind, wobei PA 6I/6T, PA MACM12, PA MACMI/12, PA MACMI/MACMT/12, PA MACMI/MACMT/MACM12, PA MACM12/PACM12 und Mischungen daraus besonders bevorzugt sind.

Eine andere bevorzugte Ausführungsform der vorliegenden Erfindung sieht vor, dass das amorphe oder mikrokristallinen Polyamid Ab) eine Glasübergangstemperatur von mindestens 120 °C, bevorzugt von mindestens 140 °C, besonders bevorzugt von mindestens 155 °C und am bevorzugtesten von mindestens 180 °C aufweist. Die Glasübergangstemperatur wird dabei nach ISO 11357-2 und -3 (2013) bestimmt.

Nach einer anderen bevorzugten Ausführungsform der vorliegenden Erfindung beträgt der Anteil des teilkristallinen Polyamids Aa) an Komponente (A) 60 bis 85 Gew.-% und bevorzugt 65 bis 80 Gew.-%.

Gemäß einer bevorzugten Ausführungsform der vorliegenden Erfindung beträgt der Anteil des amorphen oder mikrokristallinen Polyamids Ab) an Komponente (A) 15 bis 40 Gew.-% und bevorzugt 20 bis 35 Gew.-%.

Eine andere bevorzugte Ausführungsform der vorliegenden Erfindung sieht vor, dass der Anteil von Komponenten (A) in der Polyamid-Formmasse 34,9 bis 69,9 Gew.-%, bevorzugt 39,7 bis 59,7 Gew.-% und besonders bevorzugt 44,5 bis 54,4 Gew.-% bezogen auf das Gesamtgewicht der Polyamid-Formmasse beträgt.

Nach einer anderen bevorzugten Ausführungsform der vorliegenden Erfindung beträgt der Anteil von Komponente (B) in der Polyamid-Formmasse 30 bis 65 Gew.-%, bevorzugt 40 bis 60 Gew.-% und besonders bevorzugt 45 bis 55 Gew.-% bezogen auf das Gesamtgewicht der Polyamid-Formmasse.

Gemäß einer anderen bevorzugten Ausführungsform der vorliegenden Erfindung beträgt der Anteil von Komponenten (C) in der Polyamid-Formmasse 0,1 bis 8 Gew.-%, bevorzugt 0,3 bis 6 Gew.-% und besonders bevorzugt 0,5 bis 5 Gew.-% bezogen auf das Gesamtgewicht der Polyamid-Formmasse.

Eine andere bevorzugte Ausführungsform der vorliegenden Erfindung sieht vor, dass der Anteil von Komponenten (A) in der Polyamid-Formmasse 34,9 bis 69,9 Gew.-%, bevorzugt 39,7 bis 59,7 Gew.-% und besonders bevorzugt 44,5 bis 54,4 Gew.-% bezogen auf das Gesamtgewicht der Polyamid-Formmasse beträgt, und
der Anteil von Komponente (B) in der Polyamid-Formmasse 30 bis 65 Gew.-%, bevorzugt 40 bis 60 Gew.-% und besonders bevorzugt 45 bis 55 Gew.-% bezogen auf das Gesamtgewicht der Polyamid-Formmasse beträgt, und der Anteil von Komponenten (C) in der Polyamid-Formmasse 0,1 bis 8 Gew.-%, bevorzugt 0,3 bis 6 Gew.-% und besonders bevorzugt 0,5 bis 5 Gew.-% bezogen auf das Gesamtgewicht der Polyamid-Formmasse beträgt.

Gemäß einer bevorzugten Ausführungsform der vorliegenden Erfindung besteht der Glasfüllstoff aus Glas mit einem Gehalt an Alkalioxiden und Erdalkalioxiden von 0 bis 10 Gew.-%, bevorzugt 0 bis 8 Gew.-%, bevorzugt 0 bis 6 Gew.-%, bezogen auf die Zusammensetzung des Glases.

Der Glasfüller ist ausgewählt aus der Gruppe bestehend aus Fasern, gemahlenen Fasern, Partikeln, Flakes, Kugeln und Mischungen hiervon, bevorzugt bestehend aus Fasern, Partikeln, Flakes und Mischungen davon.

Der Glasfüllstoff kann oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyethern, Epoxiden, Nickel respektive Kombinationen oder Mischungen davon verwendet werden. Bevorzugt ist der Glasfüller mit Aminosilanen, Epoxysilanen, Polyamiden oder Mischungen davon oberflächenbehandelt.

Werden als Glasfüllstoff für die Komponente (B) Fasern ausgewählt, dann werden die Glasfasern aus der Gruppe bestehend aus geschnittenen Fasern, Endlosfasern und Mischungen davon ausgewählt, wobei die Fasern einen Querschnitt aufweisen, der rund, oval, elliptisch, eckig oder rechteckig ist.

Das Erscheinungsbild der Glasfasern kann gestreckt oder spiralförmig sein.

Die geschnittenen Glasfasern besitzen vorzugsweise eine Faserlänge von 1 bis 25 mm, bevorzugt 1,5 bis 20 mm, besonders bevorzugt 2 bis 12 mm und ganz besonders bevorzugt von 2 bis 8 mm.

Die geschnittenen Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) eingesetzt, weisen sie vorzugsweise einen Durchmesser von maximal 20 µm, bevorzugt von maximal 18 µm, besonders bevorzugt von 5 bis 14 µm auf.

Bei flachen Glasfasern beträgt das Aspektverhältnis, d.h. das Verhältnis der Hauptquerschnittsachse zur Nebenquerschnittsachse 1,5 bis 8, bevorzugt 2 bis 6, besonders bevorzugt 3 bis 5.

Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Zur Verstärkung der erfindungsgemäßen Polyamid-Formmassen können auch Mischungen von Fasern mit kreisförmigem (rundem) und nicht-kreisförmigem (flachem) Querschnitt verwendet werden.

Werden als Glasfüllstoff (B) Glaskugeln oder Glaspartikel ausgewählt, beträgt deren mittlerer volumetrische Durchmesser (*d*₅₀) 0,3 bis 100 µm, bevorzugt 5 bis 80 µm, besonders bevorzugt 17 bis 70 µm, gemessen mittels Laserbeugung nach ASTM B 822-10 (2010).

Eine andere bevorzugte Ausführungsform der vorliegenden Erfindung sieht vor, dass die Polyamid-Formmasse mindestens einen Zusatzstoff enthält, insbesondere ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Entformungsmitteln, Trennmitteln, kettenverlängernden Additiven, Farbstoffen, Markierungsmitteln, anorganischen Pigmenten, organischen Pigmenten, IR-Absorbern, NIR-Absorbern, photochromen Agenzien, Entformungsmitteln, optischen Aufhellern, Polytetrafluorethylen, halogenfreien Flammschutzmitteln, natürlichen Schichtsilikaten, synthetischen Schichtsilikaten, Füllstoffen mit einer relativen Permittivität vom maximal 3,5, z.B. Kreide oder Talk, nanoskaligen Füllstoffen mit einer mittleren Partikelgrösse von maximal 100 nm, vorzugsweise bestimmt mittels Lasermessung nach ISO 13320.

Nach einer anderen bevorzugten Ausführungsform der vorliegenden Erfindung weist die Formmasse eine Bindenahtfestigkeit bestimmt nach EN ISO 178 (2010) von mindestens 200 MPa und bevorzugt von mindestens 250 MPa auf.

Gemäß einer weiteren bevorzugten Ausführungsform der vorliegenden Erfindung besteht Komponente (A) nur aus den Komponenten Aa) und Ab).

Eine weitere bevorzugte Ausführungsform der vorliegenden Erfindung sieht vor, dass das die Polyamid-Formmasse nur aus den Komponenten (A), (B) und (C) besteht.

### Formkörper

Die vorliegende Erfindung betrifft weiterhin Formkörper welche die erfindungsgemäße Polyamid-Formmasse enthalten und die bevorzugt aus dieser Polyamid-Formmasse bestehen.

Nach einer bevorzugten Ausführungsform der vorliegenden Erfindung handelt es sich bei den Formkörpern um Komponenten, Gehäuse oder Gehäuseteile von mit elektromagnetischen Wellen mit einer Frequenz von 0,3 bis 300 GHz kommunizierenden Geräten, d.h. mit Wellenlängen von 1 m bis 10 mm.

Eine weitere bevorzugte Ausführungsform der vorliegenden Erfindung sieht vor, dass der Formkörper ausgewählt ist aus der Gruppe bestehend aus Komponenten, Gehäusen oder Gehäuseteilen von Sende- und Empfangsgeräten, Mobiltelefonen, Tabletts, Laptops, Navigationsgeräten, Überwachungskameras, Fotokameras, Sensoren, Tauchcomputern, Audioanlagen, Fernbedienungen, Lautsprechern, Kopfhörern, Radiogeräten, Fernsehgeräten, Haushaltsgeräten, Küchengeräten, Tür- oder Toröffnern, Bediengeräten für die Zentralverriegelung bei Fahrzeugen, Keyless-go-Fahrzeugschlüsseln, Temperaturmess- bzw. Temperaturanzeigegeräten, Messgeräten und Steuergeräten.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet:

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg) und Schmelzpunkt

Die Bestimmung der Glasübergangstemperatur und des Schmelzpunkts erfolgte nach ISO 11357-2 und -3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Glasübergangstemperatur (Tg) und Schmelzpunkt wurden bei der zweiten Aufheizung bestimmt. Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Reißfestigkeit und Reißdehnung

Die Bestimmung von Reißfestigkeit und Reißdehnung wurden gemäß ISO 527 (2012) bei 23°C mit einer Zuggeschwindigkeit von 5 mm/min bei verstärkten Materialien an einem ISO-Zugstab, Typ A1 (Masse 170 x 20/10 x 4 mm), hergestellt gemäß der Norm ISO/CD 3167 (2003), durchgeführt.

### Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

### Kerbschlagzähigkeit nach Charpy

Die Bestimmung der Kerbschlagzähigkeit nach Charpy wurde gemäß ISO 179/2*eA (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

### Bindenahtfestigkeit

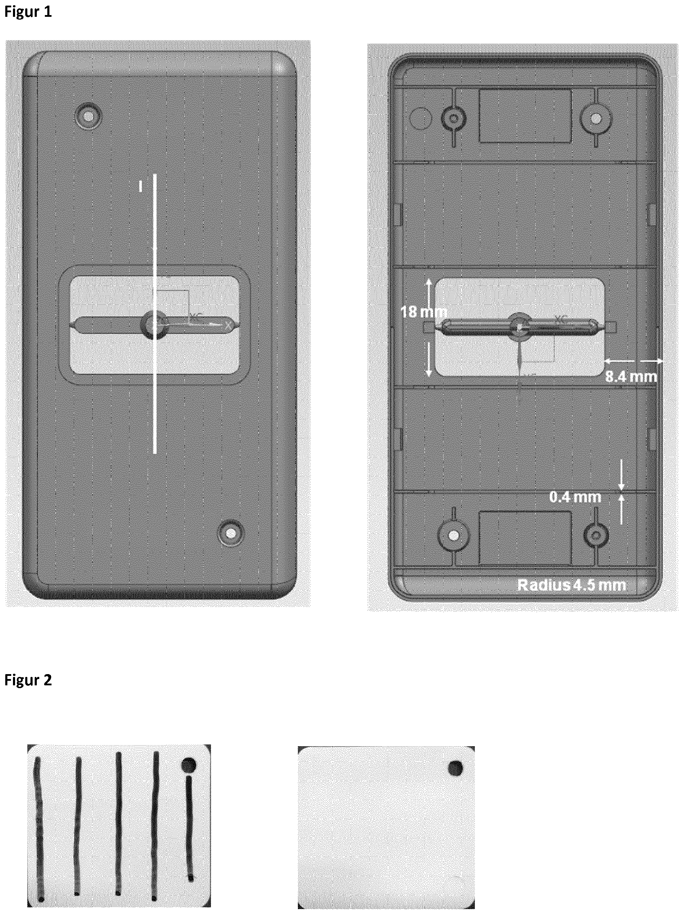

Die Bindenahtfestigkeit wurde über einen Biegeversuch nach EN ISO 178 (2010) an 2 zusammengesteckten Handy-Halbschalen (99,7 x 49,7 x 7,1 mm) als Prüfkörper mit einer Prüfmaschine Zwick TC-FR010TH.A50 mit einer Druckfinne (Radius der Druckfinne = 5 mm) bei einer Prüfgeschwindigkeit von 100 mm/min bestimmt. Die Position der Druckfinne auf der Handy-Halbschale kann der linken Seite der Figur 1 entnommen werden (Bezugszeichen I), die weiteren Abmessungen der Handy-Halbschalen gehen aus der rechten Seite von Figur 1 hervor. Angegeben ist der arithmetische Mittelwert aus den Messungen an 5 Prüfkörpern.

### Relative Permittivität

Die Messung der relativen Permittivität εᵣ erfolgt nach IEC 61189-2-721 (2015) an 80 x 80 x 3 mm Platten mit Filmanguss mit einem Split Post Dielectric Resonator (SPDR) der Firma QWED, Polen (Broschüre, inklusive Informationen zur Messung erhältlich unter www.qwed.eu). Die Messfrequenz beträgt 2,45 GHz, die Messtemperatur 23 °C.

### Spritzschwund

Die Herstellung der Platten (Typ D2, 60 x 60 x 2 mm, Filmanguss) zur Bestimmung des Spritzschwunds erfolgte gemäss ISO 294-3 (2002) und Amendment 1 (2006). Der Spritzschwund wurde gemäß ISO 294-4 (2001) nach Lagerung der Platten für 14 Tage im Normklima (23 °C, 50 % relative Feuchte) in Bezug auf die Formnestgrösse bestimmt und zwar längs und quer zur Fliessrichtung der Formmassenschmelze. Angegeben ist der arithmetische Mittelwert aus den Messungen an 5 Platten. Die Differenz aus dem Spritzschwund längs und quer zur Fliessrichtung der Formmassenschmelze wird im Folgenden auch als Verzug bezeichnet.

### Anfärbetest

Mit einem Filzstift der Marke Zebra, Typ MO-120-MC (black) werden auf Platten (Typ D1, 60x60x1 mm, Filmanguss, nach ISO 294-3 (2002) und Amendment 1 (2006)) 5 äquidistante Linien parallel oder senkrecht zum Filmanguss bzw. ein ausgemaltes Quadrat mit 2 cm Seitenlänge aufgetragen. Anschließend werden die bemalten Platten 1 h im Klimaschrank bei 70 °C und 65 % relativer Feuchte gelagert, aus dem Klimaschrank entnommen und danach bei Raumtemperatur 1 h im Labor abgekühlt. Mit einem einmal mit Ethanol getränkten Kosmetiktuch wird sodann zehnmal über die Markierung gewischt. Das Ergebnis wird mit 1 bis 5 bewertet: 1 = Markierung vollständig entfernt, 5 = Markierung unverändert.

### Glasfaser-Zusammensetzung

Die Zusammensetzung der Glasfasern wurde mit energiedissipativer Röntgenfluoreszenz-Spektroskopie (ED-XRF) bestimmt. Als Gerät wurde ein Spektrometer des Typs Spectro XEPOS He der SPECTRO Analytical Instruments GmbH verwendet. Die Glasfasern wurden in eine Polypropylen (PP)-Küvette gegeben, deren Boden aus einer PP-Folie besteht. Die Röntgenquelle hat eine Leistung von 50 W und arbeitet bis 60 kV. Folgende Targets wurden zur Bestimmung der einzelnen Elemente benutzt: Compton/Sekundär Molybdän, Barkla-Streuer Korund, Sekundär-Target Kobalt und Sekundärtarget Palladium. Die Messzeit betrug jeweils 180 s.

### 2 Ausgangsmaterialien

Die in den Beispielen und Vergleichsbeispielen verwendeten Materialien werden in den Tabellen 1 bis 3 zusammengefasst.

**Tabelle 1: In den Beispielen und Vergleichsbeispielen verwendete Materialien**

| **Komponenten** | **Beschreibung** | **Hersteller** |
|---|---|---|
| Polyamid (Aa1) | Polyamid 12 aus Laurinlactam | EMS-CHEMIE AG, Schweiz |
| | RV*: 1.90 (gemessen mit 0,5 g in 100 ml m-Kresol bei 20 °C) | |
| | C-Atome pro Amidgruppe 11.0 | |
| | Schmelzpunkt 178 °C | |
| Polyamid (Aa2) | Polyamid 610 aus 1,6-Hexandiamin und 1,10-Decandisäure | EMS-CHEMIE AG, Schweiz |
| | C-Atome pro Amidgruppe 7,0 | |
| | RV* 1,95 (gemessen mit 0,5 g in 100 ml m-Kresol bei 20 °C) | |
| | Schmelzpunkt 223 °C | |
| Polyamid (Aa3) | Polyamid 6 aus ε-Caprolactam | EMS-CHEMIE AG, Schweiz |
| | C-Atome pro Amidgruppe 5,0 | |
| | RV 1,83 (gemessen mit 0,5 g in 100 ml m-Kresol bei 20 °C) | |
| | Schmelzpunkt 222 °C | |
| Polyamid (Aa4) | Polyamid 66 aus 1,6-Hexandiamin und 1,6-Hexandisäure | RadiciGroup Performance Plastics, Italien |
| | C-Atome pro Amidgruppe 5,0 | |
| | RV* 1,82 (gemessen mit 0,5 g in 100 ml m-Kresol bei 20 °C) | |
| | Schmelzpunkt 262 °C | |
| | Handelsname: Radipol A45 | |
| Polyamid (Aa5) | Polyamid 46 aus 1,4-Butandiamin und 1,6-Hexandisäure | EMS-CHEMIE AG, Schweiz |
| | C-Atome pro Amidgruppe 4,0 | |
| | RV* 2.00 (gemessen mit 0,5 g in 100 ml m-Kresol bei 20 °C) | |
| | Schmelzpunkt 286°C | |
| | Handelsname: Stanyl TE 300 | |
| Polyamid (Aa6) | Polyamid 616 aus 1,6-Hexandiamin und 1,16-Hexadecandisäure | EMS-CHEMIE AG, Schweiz |
| | C-Atome pro Amidgruppe 10,0 | |
| | RV* 1,95 (gemessen mit 0,5 g in 100 ml m-Kresol bei 20 °C) | |
| | Schmelzpunkt 195°C | |

**Tabelle 2: In den Beispielen und Vergleichsbeispielen verwendete Materialien**

| **Komponenten** | **Beschreibung** | **Hersteller** |
|---|---|---|
| Polyamid (Aa7) | | EMS-CHEMIE AG, Schweiz |
| | Polyamid 1016 aus 1,10-Decandiamin und 1,16-Hexadecandisäure | |
| | C-Atome pro Amidgruppe 12,0 | |
| | RV* 1,75 (gemessen mit 0,5 g in 100 ml m-Kresol bei 20°C) | |
| | Schmelzpunkt 180 °C | |
| Polyamid (Aa8) | | EMS-CHEMIE AG, Schweiz |
| | Polyamid 612 aus 1,6-Hexandiamin und 1,12-Dodecandisäure | |
| | C-Atome pro Amidgruppe 8,0 | |
| | RV* 1,80 (gemessen mit 0,5 g in 100 ml m-Kresol bei 20°C) | |
| | Schmelzpunkt 215 °C | |
| Polyamid (Ab1) | amorphes Polyamid MACM12 aus Bis(3-methyl-4-amino-cyclohexyl)-methan und 1,12-Dodecandisäure | EMS-CHEMIE AG, Schweiz |
| | C-Atome pro Amidgruppe 12,5 | |
| | RV*: 1.53 (gemessen mit 0,5 g in 100 ml m-Kresol bei 20°C) | |
| | Glasübergangstemperatur 155 °C | |
| Polyamid (Ab2) | amorphes Polyamid MACMI/MACMT/12 im Molverhältnis 38/38/24 aus Bis(3-methyl-4-amino-cyclohexyl)methan, Isophthalsäure, Terephthalsäure und Laurinlactam | EMS-CHEMIE AG, Schweiz |
| | C-Atome pro Amidgruppe 9,3 | |
| | RV 1,53 (gemessen mit 0,5 g in 100 ml m-Kresol bei 20 °C) | |
| | Glasübergangstemperatur 194 °C | |
| Polyamid (Ab3) | amorphes Polyamid 6I/6T aus Hexamethylendiamin, Isophthalsäure und Terephthalsäure | EMS-CHEMIE AG, Schweiz |
| | Molverhältnis Isophthalsäure : Terephthalsäure 2 : 1 | |
| | C-Atome pro Amidgruppe 6,0 | |
| | RV* 1,54 (gemessen mit 0,5 g in 100 ml m-Kresol bei 20°C) | |
| | Glasübergangstemperatur 125 °C | |

| | | |
|---|---|---|
| * RV relative Viskosität, gemessen an einer Lösung von 0,5 g Polyamid in 100 ml m-Kresol bei 20 °C | | |

**Tabelle 3: In den Beispielen und Vergleichsbeispielen verwendete Materialien**

| **Komponenten** | **Beschreibung** | **Hersteller** |
|---|---|---|
| Glasfaser (B1) | runde Glasfaser, 3 mm lang | Chongqing Polycomp International Corp., China |
| | Durchmesser 13 µm, | |
| | Gehalt an Alkali- und Erdalkalioxiden 5,8 Gew.-% | |
| | Handelsname: CPIC CS (HL) 301HP-3 | |
| Glasfaser (B2) | flache Glasfaser, 3 mm lang, | Nitto Boseki Co., LTD., Japan |
| | Hauptquerschnittachse 28 µm, | |
| | Nebenquerschnittachse 7 µm, | |
| | Aspektverhältnis der Querschnittachsen = 4, | |
| | Gehalt an Alkali- und Erdalkalioxiden 20,2 Gew.-% | |
| | Handelsname: Nittobo CSG3PA-820 | |
| Glasfaser (B3) | runde Glasfaser, 3 mm lang | European Owens Corning Fiberglas SPRL, Belgien |
| | Durchmesser 6 µm, | |
| | Gehalt an Alkali- und Erdalkalioxiden 15,4 Gew.-% | |
| | Handelsname: Micromax 7716 µm | |
| Glasfaser (B4) | runde Glasfaser, 3 mm lang | Chongqing Polycomp International Corp., China |
| | Durchmesser 10 µm, | |
| | Gehalt an Alkali- und Erdalkalioxiden 20,2 Gew.-% | |
| | Handelsname: CPIC ECS 301HP | |
| Glasfaser (B5) | runde Glasfaser, 4 mm lang | AGY - Europe, Frankreich |
| | Durchmesser 9 µm, | |
| | Gehalt an Alkali- und Erdalkalioxiden 7,6 Gew.-% | |
| | Handelsname: AGY SG37 553 5-32" | |
| Nukleierungsmittel (C1) | Kondensationsprodukt der Oxalsäure mit Ethylendiamin | Brüggemann Chemical, L. Brüggemann KG, Deutschland |
| | Handelsname: Brüggolen P22 | |
| Hitzestabilisator (C2) | Bis[3,3-bis-(4'hydroxy-3'-tert-butylphenyl)butansäureglykolester | Clariant Produkte (Schweiz) AG, Schweiz |
| | CAS-Nr. 32509-66-3 | |
| | Handelsname: Hostanox O 3 P | |
| Hitzestabilisator (C3) | Tetrakis(2,4-di-tert-butylphenyl)-4,4'-biphenyl-diphosphonit | Clariant Produkte (Schweiz) AG, Schweiz |
| | CAS-Nr. 119345-01-6 | |
| | Handelsname: Hostanox P-EPQ | |
| UV-Stabilisator (C4) | 2-(2H-Benzotriazol-2-yl)-4,6-bis(1-methyl-1-phenylethyl)phenol | BASF Schweiz AG, Schweiz |
| | CAS-Nr. 70321-86-7 | |
| | Handelsname: Tinuvin 234 | |
| Multifunktionsstabilisator (C5) | N,N'-Bis(2,2,6,6,tetramethyl-4-pipendinyl)-1,3-benzen-dicarboxamid | Clariant Produkte (Schweiz) AG, Schweiz |
| | CAS-Nr. 42774-15-2 | |
| | Handelsname: Nylostab S-EED P | |
| Stabilisator-Paket (C6) | Mischung der Stabilisatoren (C2) bis (C5) im Gewichtsverhältnis | - |
| | C2 : C3 : C4 : C5 = 2,5 : 1 : 1,5 : 1 | |

### 3 Beispiele und Vergleichsbeispiele

### 3.1 Herstellung der PA-Formmassen

Zur Herstellung der erfindungsgemäßen Polyamid-Formmassen werden die Komponenten (A) und (B) und gegebenenfalls (C) auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug oder jeweils in einen Sidefeeder dosiert oder in Form eines Dryblends zugeführt. Die Komponente (B) (Glasfüllstoff) wird bevorzugt über einen Sidefeeder in die Polymerschmelze dosiert.

Werden Zusatzstoffe (Komponente C) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignen sich dazu besonders das Polyamid der jeweiligen Komponenten Aa), PA 11, PA 12, PA 612, PA 1010 oder PA 1212.

Zur Dryblend-Herstellung werden das getrocknete Granulat der Komponente (A) und gegebenenfalls die Komponente (C) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 320 °C, wobei die Temperatur des ersten Zylinders unter 110 °C eingestellt werden kann. Vor der Düse kann Vakuum angelegt oder atmosphärisch entgast werden. Die Schmelze kann in Strangform ausgetragen, im Wasserbad bei 10 bis 80 °C abgekühlt und anschließend granuliert werden. Das Granulat wird bei 80 bis 120 °C unter Stickstoff oder im Vakuum auf einen Wassergehalt von unter 0,1 Gew.-% getrocknet. Die Granulierung kann ebenfalls durch Unterwassergranulierung durchgeführt werden.

Die Verarbeitung der erfindungsgemäßen Polyamid-Formmassen im Spritzguss erfolgt bei Zylindertemperaturen von 250 bis 320 °C, wobei ein vom Einzug zur Düse hin auf- und absteigendes Temperaturprofil verwendet werden kann. Die Werkzeugtemperatur wird auf eine Temperatur von 40 bis 140 °C, bevorzugt 60 bis 80 °C eingestellt.

### 3.2 Herstellung der Polyamid-Formmasse gemäß Beispiel 1

Die getrockneten Granulate der Polyamide (Aa1) und (Ab1) wurden zusammen mit den Zusatzstoffen (C1) und (C6) zu einem Dryblend vermischt, und zwar in dem in der Tabelle 4 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & PfleidererTyp ZSK 25 in dem in Tabelle 4 angegebenen Verhältnis hergestellt. Das Dryblend wurde dabei über eine Dosierwaage in den Einzug dosiert. Die Glasfasern (B1) wurden über eine Dosierwaage in einen Sidefeeder dosiert, der die Glasfasern (B1) sechs Gehäuseeinheiten vor der Düse in die Schmelze förderte.

Die Temperatur des ersten Gehäuses wurde auf 70 °C eingestellt, diejenige der restlichen Gehäuse auf 260 bis 280 °C. Es wurde eine Drehzahl von 250 U/min und ein Durchsatz von 15 kg/h verwendet und atmosphärisch entgast. Die Stränge wurden im Wasserbad abgekühlt, geschnitten und das erhaltene Granulat bei 110 °C für 24 h im Vakuum (30 mbar) auf einen Wassergehalt unter 0,1 Gew.-% getrocknet.

### 3.3 Herstellung der Prüfkörper

Die Prüfkörper wurden auf einer Spritzgussmaschine der Firma Arburg, Modell Allrounder 420 C 1000-250 hergestellt. Dabei wurden aufsteigende Zylindertemperaturen von 250 °C bis 290 °C verwendet. Die Formtemperatur betrug 60°C.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

### 3.4 Ergebnisse

Die folgende Tabelle 4 sowie die Tabellen 7 und 8 (teilweise) betreffen Beispiele gemäß der vorliegenden Erfindung und die Tabellen 5 und 6 sowie 7 und 8 (teilweise) zeigen Vergleichsbeispiele.

Zu den Komponenten (A), (B) und (C) wurden in den Tabellen jeweils Mengenangaben in Gewichtsprozent gemacht. In den Tabellen 4 bis 6 ist unter dem Eintrag "C-Atome pro Amidgruppe" die durchschnittliche Zahl der nicht an der Amidgruppe beteiligten C-Atome pro Amidgruppe in der Mischung zu verstehen.

**Tabelle 4: Beispiele**

| **Komponenten** | **Einheit** | **Beispiele** | | | | | | | | |
|---|---|---|---|---|---|---|---|---|---|---|
| | | **1** | **2** | **3** | **4** | **5** | **6** | **7** | **8** | **9** |
| Polyamid (Aa1) | Gew.-% | 36.975 | 33.225 | 29.475 | 36.975 | - | - | - | - | - |
| Polyamid (Ab1) | Gew.-% | 12.325 | 11.075 | 9.825 | - | - | - | - | - | - |
| Polyamid (Ab2) | Gew.-% | - | - | - | 12.325 | - | - | - | - | - |
| Polyamid (Aa2) | Gew.-% | - | - | - | - | 36.975 | - | - | - | - |
| Polyamid (Ab3) | Gew.-% | - | - | - | - | 12.325 | 16.075 | 16.075 | 16.075 | 16.075 |
| Polyamid (Aa6) | Gew.-% | - | - | - | - | - | 48.225 | 38.225 | - | - |
| Polyamid (Aa7) | Gew.-% | - | - | - | - | - | - | - | 48.225 | - |
| Polyamid (Aa8) | Gew.-% | - | - | - | - | - | - | - | - | 48.225 |
| **C-Atome pro Amidgruppe** | - | 11.4 | 11.4 | 11.4 | 10.6 | 6.8 | 9.0 | 8.8 | 10.5 | 7.5 |
| Glasfaser (B1) | Gew.-% | 50 | 55 | 60 | 50 | 50 | - | 45 | - | - |
| Glasfaser (B5) | | - | - | - | - | - | 35 | - | 35 | 35 |
| Nukleierungsmittel (C1) | Gew.-% | 0.1 | 0.1 | 0.1 | 0.1 | 0.1 | 0.1 | 0.1 | 0.1 | 0.1 |
| Stabilisatorpaket (C6) | Gew.-% | 0.6 | 0.6 | 0.6 | 0.6 | 0.6 | 0.6 | 0.6 | 0.6 | 0.6 |
| **Tests** | | | | | | | | | | |
| relative Permittivität (εᵣ) bei 2.45 GHz | - | 3.24 | 3.35 | 3.42 | 3.27 | 3.47 | 3.27 | 3.34 | 3.22 | 3.30 |
| linearer Spritzschwund, längs, 24 h (SSWl) | % | -0.01 | -0.01 | -0.01 | 0.01 | 0.26 | 0.03 | 0.02 | 0.03 | 0.02 |
| linearer Spritzschwund, quer, 24 h (SSWq) | % | 0.30 | 0.29 | 0.25 | 0.27 | 0.29 | 0.30 | 0.32 | 0.29 | 0.31 |
| Verzug^{a)} | % | 0.31 | 0.30 | 0.26 | 0.26 | 0.03 | 0.27 | 0.30 | 0.26 | 0.29 |
| linearer Spritzschwund, längs, 14 d (SSWl) | % | -0.01 | -0.02 | -0.01 | -0.03 | 0.26 | 0.02 | 0.01 | 0.02 | 0.01 |
| linearer Spritzschwund, quer, 14 d (SSWq) | % | 0.30 | 0.29 | 0.26 | 0.26 | 0.49 | 0.29 | 0.31 | 0.28 | 0.30 |
| Verzug^{a)} | % | 0.31 | 0.31 | 0.27 | 0.29 | 0.13 | 0.27 | 0.30 | 0.26 | 0.29 |
| Zug-E-Modul | MPa | 12100 | 13900 | 15600 | 12100 | 14250 | 11080 | 11700 | 10400 | 11600 |
| Reisfestigkeit | MPa | 148 | 148 | 150 | 166 | 191 | 182 | 175 | 170 | 218 |
| Reissdehnung | % | 4.3 | 3.7 | 3.1 | 2.9 | 3.7 | 4.6 | 3.9 | 4.3 | 3.8 |
| Schlagzähigkeit, Charpy, 23°C | kJ/m² | 82 | 80 | 73 | 80 | 99 | 106 | 77 | 101 | 100 |
| Kerbschlagzähigkeit, Charpy, 23°C | kJ/m² | 23 | 22 | 21 | 25 | 19 | 17 | 17 | 15 | 13 |

| | | | | | | | | | | |
|---|---|---|---|---|---|---|---|---|---|---|
| a) Der Verzug entspricht der Differenz aus SSWq und SSWl. | | | | | | | | | | |

**Tabelle 5: Vergleichsbeispiele**

| **Komponenten** | **Einheit** | **Vergleichs beispiele** | | | | |
|---|---|---|---|---|---|---|
| | | **10** | **11** | **12** | **13** | **14** |
| Polyamid (Aa1) | Gew.-% | 36,975 | 35,475 | 33,225 | 33,225 | 25,725 |
| Polyamid (Ab1) | Gew.-% | 12,325 | 11,825 | 11,075 | 11,075 | 8,575 |
| **C-Atome pro Amidgruppe** | - | 11,4 | 11,4 | 11,4 | 11,4 | 11,4 |
| Glasfaser (B2) | Gew.-% | 50 | 52 | 55 | - | 55 |
| Glasfaser (B3) | Gew.-% | - | - | - | 55 | - |
| PTFE Pulver CF 905 FN | Gew.-% | - | - | - | - | 10 |
| Nukleierungsmittel (C1) | Gew.-% | 0,1 | 0,1 | 0,1 | 0,1 | 0,1 |
| Stabilisatorpaket (C6) | Gew.-% | 0,6 | 0,6 | 0,6 | 0,6 | 0,6 |
| **Tests** | | | | | | |
| relative Permittivität (εᵣ) bei 2.45 GHz | - | 3,73 | 3,73 | 3,84 | 3,83 | 3,93 |
| linearer Spritzschwund, längs, 14 d (SSWl) | % | -0,11 | 0,01 | -0,10 | -0,08 | -0,03 |
| linearer Spritzschwund, quer, 14 d (SSWq) | % | 0,13 | 0,16 | 0,11 | 0,22 | 0,11 |
| Verzug^{a)} | % | 0,24 | 0,17 | 0,21 | 0,30 | 0,14 |
| Zug-E-Modul | MPa | 14100 | 14400 | 16000 | 16500 | 16650 |
| Reißfestigkeit | MPa | 172 | 172 | 179 | 171 | 157 |
| Reißdehnung | % | 3,1 | 3,1 | 2,8 | 3,9 | 2,9 |
| Schlagzähigkeit, Charpy, 23°C | kJ/m² | 86 | 88 | 85 | 86 | 83 |
| Kerbschlagzähigkeit, Charpy, 23°C | kJ/m² | 24 | 26 | 25 | 19 | 22 |

| | | | | | | |
|---|---|---|---|---|---|---|
| a) Der Verzug entspricht der Differenz aus SSWq und SSWl. | | | | | | |

**Tabelle 6: Vergleichsbeispiele**

| **Komponenten** | **Einheit** | **Vergleichsbeispiele** | | | | | | |
|---|---|---|---|---|---|---|---|---|
| | | **15** | **16** | **17** | **18** | **19** | **20** | **21** |
| Polyamid (Aa1) | Gew.-% | 36,975 | 29,475 | 25,725 | - | - | - | - |
| Polyamid (Ab1) | Gew.-% | 12,325 | 9,825 | 8,525 | - | - | - | - |
| Polyamid (Ab3) | Gew.-% | - | - | - | - | - | 12,325 | - |
| Polyamid (Aa3) | Gew.-% | - | - | - | 49,3 | - | - | - |
| Polyamid (Aa4) | Gew.-% | - | - | - | - | 49,3 | 36,975 | - |
| Polyamid (Aa5) | Gew.-% | - | - | - | - | - | - | 49,3 |
| **C-Atome pro Amidgruppe** | - | 11,4 | 11,4 | 11,4 | 5,0 | 5,0 | 5,3 | 4,0 |
| Glasfaser (B1) | Gew.-% | - | - | - | 50 | 50 | 50 | 50 |
| Glasfaser (B4) | Gew.-% | 50 | 60 | 65 | - | - | - | - |
| Nukleierungsmittel (C1) | Gew.-% | 0,1 | 0,1 | 0,1 | 0,1 | 0,1 | 0,1 | 0,1 |
| Stabilisatorpaket (C6) | Gew.-% | 0,6 | 0,6 | 0,6 | 0,6 | 0,6 | 0,6 | 0,6 |
| **Tests** | | | | | | | | |
| relative Permittivität (εᵣ) bei 2.45 GHz | - | 3,67 | 3,99 | 4,21 | 3,64 | 3,57 | 3,69 | 3,70 |
| linearer Spritzschwund, längs, 14 d (SSWl) | % | -0,03 | -0,04 | -0,04 | 0,29 | 0,34 | 0,09 | 0,24 |
| linearer Spritzschwund, quer, 14 d (SSWq) | % | 0,21 | 0,18 | 0,17 | 0,59 | 1,02 | 0,76 | 1,03 |
| Verzug ^{a)} | % | 0,24 | 0,22 | 0,21 | 0,30 | 0,68 | 0,67 | 0,79 |
| Zug-E-Modul | MPa | 12950 | 16650 | 19400 | 15000 | 14500 | 14900 | 14400 |
| Reißfestigkeit | MPa | 166 | 178 | 183 | 197 | 195 | 208 | 209 |
| Reißdehnung | % | 2,9 | 2,3 | 2,0 | 3,6 | 3,1 | 3,1 | 2,7 |
| Schlagzähigkeit, Charpy, 23 °C | kJ/m² | 80 | 77 | 67 | 76 | 90 | 100 | 51 |
| Kerbschlagzähigkeit, Charpy, 23°C | kJ/m² | 25 | 24 | 23 | 15 | 14 | 14 | 11 |

| | | | | | | | | |
|---|---|---|---|---|---|---|---|---|
| a) Der Verzug entspricht der Differenz aus SSWq und SSWl. | | | | | | | | |

**Tabelle 7: Anfärbetest an 60x60x1 mm Platten mit Filmanguss**

| **Komponenten** | **Einheit** | **Beispiel** | **Vergleichsbeispiel** |
|---|---|---|---|
| | | **22** | **23** |
| Polyamid (Aa1) | Gew.-% | 36,975 | 10,0 |
| Polyamid (Ab1) | Gew.-% | - | 39,3 |
| Polyamid (Ab2) | Gew.-% | 12,325 | - |
| Glasfaser (B1) | Gew.-% | 50 | 50 |
| Nukleierungsmittel (C1) | Gew.-% | 0,1 | 0,1 |
| Stabilisatorpaket (C6) | Gew.-% | 0,6 | 0,6 |
| **Test*** | | | |
| **Stift: ZEBRA, MO-120-MC (black)** | | | |
| 5 Striche, äquidistant, parallel zum Filmanguss | - | 2 | 4-5 |
| 5 Striche, äquidistant, senkrecht zum Filmanguss | - | 2 | - |
| Quadrat, ausgemalt, 2 cm Seitenlänge, Mitte der Platte | | 2 | |

| | | | |
|---|---|---|---|
| * Beurteilung 1 bis 5, 1 = Markierung vollständig entfernt 5 = Markierung unverändert | | | |

**Tabelle 8: Test der Bindenahtfestigkeit an zwei zusammengesetzten Handy-Halbschalen**

| **Komponenten** | **Einheit** | **Beispiele** | | **Vergleichsbeispiel** |
|---|---|---|---|---|
| | | **24** | **25** | **26** |
| Polyamid (Aa1) | Gew.-% | 36,975 | 33,225 | 10,0 |
| Polyamid (Ab1) | Gew.-% | 12,325 | 11,075 | 39,3 |
| Glasfaser (B1) | Gew.-% | 50 | 55 | 50 |
| Nukleierungsmittel (C1) | Gew.-% | 0,1 | 0,1 | 0,1 |
| Stabilisatorpaket (C6) | Gew.-% | 0,6 | 0,6 | 0,6 |
| **Test** | | | | |
| Bindenahtfestigkeit bei 100 mm/min | MPa | 310 | 289 | 136 |

### 4 Diskussion der Ergebnisse

Tabelle 4 kann entnommen werden, dass die Polyamid-Formmassen gemäß der Beispiele 1 bis 9, welche Glasfüllstoffe gemäß der vorliegenden Erfindung mit einem Gehalt an Alkalioxiden und Erdalkalioxiden von 5,8 Gew.-% bzw. 7,6 Gew.-% enthalten, eine relative Permittivität bei 2,45 GHz von 3,22 bis 3,47 aufweisen. Die in Tabelle 5 beschriebenen Polyamid-Formmassen gemäß der Vergleichsbeispiele 10 bis 14 enthalten hingegen Glasfüllstoffe mit einem höheren Gehalt an Alkalioxiden und Erdalkalioxiden (20,2 Gew.-% bzw. 15,4 Gew.-%) und weisen deutlich höhere relative Permittivitäten bei 2.45 GHz von 3,73 bis 3,93 auf. Gleiches gilt für die Vergleichsbeispiele 15 bis 17 aus Tabelle 5, die einen Glasfüller mit einem Gehalt an Alkalioxiden und Erdalkalioxiden von 20,2 Gew.-% enthalten und relative Permittivitäten von 3,67 bis 4,21 aufweisen. Direkt vergleichbar sind auf Grund der ansonsten gleichen Zusammensetzung beispielsweise Beispiel 1 mit den Vergleichsbeispielen 10 und 15 (relative Permittivität von 3,24 für Beispiel 1 gegenüber 3,73 für VB6 und 3,67 für VB11) oder Beispiel 2 mit Vergleichsbeispiel 12 (relative Permittivität von 3,35 für Beispiel 2 gegenüber 3,84 für VB12).

Weiterhin zeigen die Vergleichsbeispiele 18, 19 und 21, dass auch die Kombination eines teilkristallinen aliphatischen Polyamids (Komponente Aa)) allein mit einem erfindungsgemäßen Glasfüllstoff zu hohen Permittivitäten von 3,64 bzw. 3,67 führt. Aus dem Vergleich mit den erfindungsgemäßen Beispielen (z.B. Vergleich mit Beispiel 1 mit in Summe ebenfalls 49,3 Gew.-% Polyamid wie in VB18 oder VB19) muss gefolgert werden, dass es zum Erreichen von tiefen Permittivitäten wesentlich ist einen Blend aus einem teilkristallinen aliphatischen (Komponente Aa)) und einem amorphen oder mikrostallinen Polyamid (Komponente Ab)) zu verwenden. In VB20 liegt nun ein Blend aus einem teilkristallinen alphatischen (Komponente Aa)) und einem amorphen Polyamid (Komponente Ab)) in Kombination mit einer erfindungsgemäßen Glasfaser vor. Dennoch liegt die Permittivität dieser Polyamid-Formmasse mit 3,69 relativ hoch. Daraus lässt sich folgern, dass auch das Blendverhältnis und die daraus folgende durchschnittliche Zahl der nicht an der Amidgruppe beteiligten C-Atome pro Amidgruppe in der Mischung (für VB20 nur 5,3) essentiell ist, um eine tiefe relative Permittivität zu erreichen.

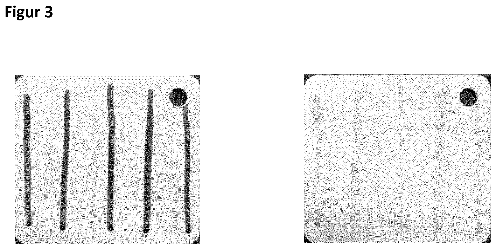

Aus Tabelle 7 geht hervor, dass die Polyamid-Formmassen gemäß der vorliegenden Erfindung auch ein verbessertes schmutzabweisendes Verhalten zeigen. Figur 2 zeigt den Anfärbetest gemäß Beispiel 22 (dessen Zusammensetzung identisch mit der der erfindungsgemässen Polyamid-Formmasse des Beispiels 4 ist) und Figur 3 zeigt den Anfärbetest gemäß dem Vergleichsbeispiel 23. Die linke Seite beider Figuren zeigt jeweils eine Platte vor der unter Punkt 1 beschriebenen Behandlung mit Ethanol, die rechte Seite der Figuren zeigt die Platten nach erfolgter Ethanolbehandlung. Das schmutzabweisende Verhalten der Platten aus den erfindungsgemäßen Polyamid-Formmassen mit einem Unterschuss der Komponente Ab) ist signifikant besser als die der Polyamid-Formmasse des Vergleichsbeispiels 23 mit einem Überschuss der Komponente Ab).

Weiterhin kann Tabelle 8 entnommen werden, dass die Bindenahtfestigkeit von Formkörpern aus den erfindungsgemäßen Polyamid-Formmassen von Beispiel 24 und Beispiel 25 (deren Zusammensetzung identisch mit denen der erfindungsgemässen Polyamid-Formmassen der Beispiele 1 und 2 ist) mit 310 MPa bzw. 289 MPa deutlicher höher liegt, als die aus einer Polyamid-Formmasse, welche ein nicht erfindungsgemäßes Verhältnis der Polyamide Aa) und Ab) in der Mischung (A) aufweist, nämlich einen Überschuss der Komponente Ab). Die Bindenahtfestigkeit der Polyamid-Formmasse des Vergleichsbeispiels 26 liegt nur bei 136 MPa.

Zusammenfassend lässt sich feststellen, dass nur über die von den Erfindern gefundene spezielle Merkmalskombination Polyamid-Formmassene erhalten werden, die eine niedrige relative Permittivität von <3,5, ein gutes schmutzabweisendes Verhalten sowie gute mechanische Eigenschaften, insbesondere eine gute Bindenahtfestigkeit aufweisen.

## Patentansprüche

1. Polyamid-Formmasse enthaltend die folgenden Komponenten:
(A) 25 bis 80 Gew.-% einer Mischung aus
Aa) 50,1 bis 90 Gew.-% mindestens eines teilkristallinen, aliphatischen Polyamids ausgewählt aus der Gruppe bestehend aus PA 10, PA 11, PA 12, PA 516, PA 610, PA 612, PA 614, PA 616, PA 618, PA 1012, PA 1014, PA 1016, PA 1018 und Mischungen daraus und
Ab) 10 bis 49,9 Gew.-% mindestens eines amorphen oder mikrokristallinen Polyamids,
wobei sich die Anteile der Komponenten Aa) und Ab) zu 100 Gew.-% addieren und wobei die Mischung der Komponenten Aa) und Ab) durchschnittlich mindestens 5,7 nicht an der Amidgruppe beteiligter C-Atome pro Amidgruppe in der Mischung (A) aufweist,
(B) 20 bis 65 Gew.-% zumindest eines Glasfüllstoffs, bestehend aus Glas mit einem Gehalt an Alkalioxiden und Erdalkalioxiden von 0 bis 12 Gew.-%, bezogen auf die Zusammensetzung des Glases, ausgewählt aus einer Gruppe bestehend aus Fasern, gemahlenen Fasern, Partikeln, Flakes, Kugeln und Mischungen davon
und
(C) 0 bis 10 Gew.-% Zusatzstoffe,
wobei die Summe der Komponenten (A), (B) und (C) 100 Gew.-% ergibt und wobei
die Polyamid-Formmasse eine relative Permittivität von nicht mehr als 3,5 bei 2,45 GHz aufweist, wobei die Messung der relativen Permittivität εᵣ nach IEC 61189-2-721 (2015) an 80 x 80 x 3 mm Platten bei 23 °C erfolgte.

2. Polyamid-Formmasse nach Anspruch 1, **dadurch gekennzeichnet, dass** der Verzug nicht mehr als 0,5 %, bevorzugt nicht mehr als 0,4 % und besonders bevorzugt nicht mehr als 0,3 % beträgt, wobei die Bestimmung nach ISO 294-3 (2002) an Platten des Typs D2 mit den Dimensionen 60 x 60 x 2 mm erfolgte.

3. Polyamid-Formmasse nach Anspruch 1 oder 2, **dadurch gekennzeichnet, dass** die Mischung der Komponenten Aa) und Ab) mindestens 6,5, bevorzugt 8,5 und besonders bevorzugt 10,0 nicht an der Amidgruppe beteiligter C-Atome pro Amidgruppe in der Mischung aufweist.

4. Polyamid-Formmasse nach einem der vorhergehenden Ansprüche, **dadurch gekennzeichnet, dass** das mindestens eine teilkristalline, aliphatische Polyamid Aa) ausgewählt ist aus der Gruppe bestehend aus PA 10, PA 11, PA 12, PA 516, PA 612, PA 616, PA 1012, PA 1016 und deren Mischungen.

5. Polyamid-Formmasse nach einem der vorhergehenden Ansprüche, **dadurch gekennzeichnet, dass** das mindestens eine amorphe oder mikrokristalline Polyamid Ab) ausgewählt ist aus der Gruppe bestehend aus PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18 und Mischungen daraus, wobei PA 6I/6T, PA MACM12, PA MACM14, PA TMDC12, PA TMDC14, PA MACMI/12, PA 61/6T/MACMI/MACMT, PA MACMI/MACMT/12, PA MACMI/MACMT/MACM12, PA 6I/6T/MACMI/MACMT/12, PA MACM 10/10, PA MACM 12/PACM 12, PA MACM 14/PACM 14, PA MACM18/PACM18 und Mischungen daraus bevorzugt sind, wobei PA 6I/6T, PA MACM12, PA MACMI/12, PA MACMI/MACMT/12, PA MACMI/MACMT/MACM12, PA MACM12/PACM12 und Mischungen daraus besonders bevorzugt sind.

6. Polyamid-Formmasse nach einem der vorhergehenden Ansprüche, **dadurch gekennzeichnet, dass** das amorphe oder mikrokristallinen Polyamid Ab) eine Glasübergangstemperatur von mindestens 120 °C, bevorzugt von mindestens 140 °C, besonders bevorzugt von mindestens 155 °C und am bevorzugtesten von mindestens 180 °C aufweist, wobei die Bestimmung nach ISO 11357-2 und -3 (2013) an Granulat erfolgte.

7. Polyamid-Formmasse nach einem der vorhergehenden Ansprüche, **dadurch gekennzeichnet, dass** der Anteil des teilkristallinen Polyamids Aa) an Komponente (A) 60 bis 85 Gew.-% und bevorzugt 65 bis 80 Gew.-% beträgt.

8. Polyamid-Formmasse nach einem der vorhergehenden Ansprüche, **dadurch gekennzeichnet, dass** der Anteil des amorphen oder mikrokristallinen Polyamids Ab) an Komponente (A) 15 bis 40 Gew.-% und bevorzugt 20 bis 35 Gew.-% beträgt.

9. Polyamid-Formmasse nach einem der vorhergehenden Ansprüche, **dadurch gekennzeichnet, dass** der Anteil von Komponenten (A) in der Polyamid-Formmasse 34,9 bis 69,9 Gew.-%, bevorzugt 39,7 bis 59,7 Gew.-% und besonders bevorzugt 44,5 bis 54,4 Gew.-% bezogen auf das Gesamtgewicht der Polyamid-Formmasse beträgt, und/oder
der Anteil von Komponente (B) in der Polyamid-Formmasse 30 bis 65 Gew.-%, bevorzugt 40 bis 60 Gew.-% und besonders bevorzugt 45 bis 55 Gew.-% bezogen auf das Gesamtgewicht der Polyamid-Formmasse beträgt, und/oder
der Anteil von Komponenten (C) in der Polyamid-Formmasse 0,1 bis 8 Gew.-%, bevorzugt 0,3 bis 6 Gew.-% und besonders bevorzugt 0,5 bis 5 Gew.-% bezogen auf das Gesamtgewicht der Polyamid-Formmasse beträgt.

10. Polyamid-Formmasse nach einem der vorhergehenden Ansprüche, **dadurch gekennzeichnet, dass** der Glasfüllstoff aus Glas mit einem Gehalt an Alkalioxiden und Erdalkalioxiden von 0 bis 10 Gew.-%, bevorzugt 0 bis 8 Gew.-%, besonders bevorzugt 0 bis 6 Gew.-%, bezogen auf die Zusammensetzung des Glases besteht.

11. Polyamid-Formmasse nach einem der vorhergehenden Ansprüche, **dadurch gekennzeichnet, dass** die Polyamid-Formmasse mindestens einen Zusatzstoff enthält, insbesondere ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Entformungsmitteln, Trennmitteln, kettenverlängernden Additiven, Farbstoffen, Markierungsmitteln, anorganischen Pigmenten, organischen Pigmenten, IR-Absorbern, NIR-Absorbern, photochromen Agenzien, Entformungsmitteln, optischen Aufhellern, Polytetrafluorethylen, halogenfreien Flammschutzmitteln, natürlichen Schichtsilikaten, synthetischen Schichtsilikaten, Füllstoffen mit einer relativen Permittivität vom maximal 3,5, z.B. Kreide oder Talk, nanoskaligen Füllstoffen mit einer Partikelgrösse von maximal 100 nm.

12. Polyamid-Formmasse nach einem der vorhergehenden Ansprüche, **dadurch gekennzeichnet, dass** die Formmasse eine Bindenahtfestigkeit bestimmt nach EN ISO 178 (2010) von mindestens 200 MPa und bevorzugt von mindestens 250 MPa aufweist.

13. Polyamid-Formmasse nach einem der vorhergehenden Ansprüche, **dadurch gekennzeichnet, dass** die Komponente (A) nur aus den Komponenten Aa) und Ab) besteht, und/oder
die Polyamid-Formmasse nur aus den Komponenten (A), (B) und (C) besteht.

14. Formkörper der eine Polyamid-Formmasse nach einem der Ansprüche 1 bis 13 enthält und der bevorzugt aus dieser Polyamid-Formmasse besteht.

15. Formkörper nach Anspruch 14, **dadurch gekennzeichnet, dass** es sich bei dem Formkörper um Komponenten, Gehäuse oder Gehäuseteile von mit elektromagnetischen Wellen mit einer Frequenz von 0,3 bis 300 GHz kommunizierenden Geräten handelt.

16. Formkörper nach Anspruch 15 **dadurch gekennzeichnet, dass** der Formkörper ausgewählt ist aus der Gruppe bestehend aus Komponenten, Gehäusen oder Gehäuseteilen von Sende- und Empfangsgeräten, Mobiltelefonen, Tabletts, Laptops, Navigationsgeräten, Überwachungskameras, Fotokameras, Sensoren, Tauchcomputern, Audioanlagen, Fernbedienungen, Lautsprechern, Kopfhörern, Radiogeräten, Fernsehgeräten, Haushaltsgeräten, Küchengeräten, Tür-oder Toröffnern, Bediengeräten für die Zentralverriegelung bei Fahrzeugen, Keyless-go-Fahrzeugschlüsseln, Temperaturmess- bzw. Temperaturanzeigegeräten, Messgeräten und Steuergeräten.

## Claims

1. Polyamide moulding compound comprising the following components:
(A) 25 to 80% by weight of a mixture made of
Aa) 50.1 to 90% by weight of at least one partially crystalline aliphatic polyamide selected from the group consisting of PA 10, PA 11, PA 12, PA 516, PA 610, PA 612, PA 614, PA 616, PA 618, PA 1012, PA 1014, PA 1016, PA 1018 and mixtures thereof and
Ab) 10 to 49.9% by weight of at least one amorphous or microcrystalline polyamide,
the proportions of components Aa) and Ab) adding up to 100% by weight and the mixture of components Aa) and Ab) having, on average, at least 5.7 C atoms, not involved in the amide group,
per amide group in the mixture (A),
(B) 20 to 65% by weight of at least one glass filler, consisting of glass with a content of alkali oxides and alkaline earth oxides of 0 to 12% by weight, relative to the composition of the glass, selected from a group consisting of fibres, ground fibres, particles, flakes, balls and mixtures thereof
and
(C) 0 to 10% by weight of additives,
the sum of components (A), (B) and (C) producing 100% by weight and
the polyamide moulding compound having a relative permittivity of no more than 3.5 at 2.45 GHz, wherein the measurement of the relative permittivity εᵣ is effected according to IEC 61189-2-721 (2015) on 80 x 80 x 3 mm plates at 23°C.

2. Polyamide moulding compound according to claim 1, **characterised in that** the distortion is no more than 0.5%, preferably no more than 0.4% and particularly preferably no more than 0.3%, wherein the measurement is effected according to ISO 294-3 (2002) on plates of the type D2 with the dimensions 60 x 60 x 2 mm.

3. Polyamide moulding compound according to claim 1 or 2, **characterised in that** the mixture of components Aa) and Ab) has at least 6.5, preferably 8.5, and particularly preferably 10.0 C atoms, not involved in the amide group, per amide group in the mixture.

4. Polyamide moulding compound according to one of the preceding claims, **characterised in that** the least one partially crystalline, aliphatic polyamide Aa) is selected from the group consisting of PA 10, PA 11, PA 12, PA 516, PA 612, PA 616, PA 1012, PA 1016 and the mixtures thereof being preferred.

5. Polyamide moulding compound according to one of the preceding claims, **characterised in that** the at least one amorphous or microcrystalline polyamide Ab) is selected from the group consisting of PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11, PA MACM10/10, PA MACM12/PACM12, PA MACM14/PACM14, PA MACM18/PACM18 and mixtures thereof, PA 6I/6T, PA MACM12, PA MACM14, PA TMDC12, PA TMDC14, PA MACMI/12, PA 6I/6T/MACMI/MACMT, PA MACMI/MACMT/12, PA MACMI/MACMT/MACM12, PA 6I/6T/MACMI/MACMT/12, PA MACM 10/10, PA MACM12/PACM12, PA MACM14/PACM14, PA MACM18/PACM18 and mixtures thereof being preferred, PA 6I/6T, PA MACM12, PA MACMI/12, PA MACMI/MACMT/12, PA MACMI/MACMT/MACM12, PA MACM12/PACM12 and mixtures thereof being particularly preferred.

6. Polyamide moulding compound according to one of the preceding claims, **characterised in that** the amorphous or microcrystalline polyamide Ab) has a glass transition temperature of at least 120°C, preferably of at least 140°C, particularly preferably of at least 155°C and most preferably of at least 180°C, wherein the measurement was effected according to ISO 11357-2 and -3 (2013) on granulate.

7. Polyamide moulding compound according to one of the preceding claims, **characterised in that** the proportion of microcrystalline polyamide Aa) of component A) is 60 to 85% by weight and preferably 65 to 80% by weight.

8. Polyamide moulding compound according to one of the preceding claims, **characterised in that** the proportion of amorphous or microcrystalline polyamide Ab) of component (A) is 15 to 40% by weight and preferably 20 to 35% by weight.

9. Polyamide moulding compound according to one of the preceding claims, **characterised in that** the proportion of components (A) in the polyamide moulding compound is 34.9 to 69.9% by weight, preferably 39.7 to 59.7% by weight and particularly preferably 44.5 to 54.4% by weight, relative to the total weight of the polyamide moulding compound, and/or
the proportion of component (B) in the polyamide moulding compound is 30 to 65% by weight, preferably 40 to 60% by weight and particularly preferably 45 to 55% by weight, relative to the total weight of the polyamide moulding compound, and/or
the proportion of components (C) in the polyamide moulding compound is 0.1 to 8% by weight, preferably 0.3 to 6% by weight and particularly preferably 0.5 to 5% by weight, relative to the total weight of the polyamide moulding compound.

10. Polyamide moulding compound according to one of the preceding claims, **characterised in that** the glass filler consists of glass with a content of alkali oxides and alkaline earth oxides of 0 to 10% by weight, preferably 0 to 8% by weight, preferably 0 to 6% by weight, relative to the composition of the glass.

11. Polyamide moulding compound according to one of the preceding claims, **characterised in that** the polyamide moulding compound comprises at least one additive, in particular selected from the group consisting of inorganic and organic stabilisers, in particular antioxidants, antiozonants, light-protection means, UV stabilisers,
UV absorbers or UV blockers, lubricants, mould-release agents, separating means, chain-lengthening additives, colourants, marking means, inorganic pigments, organic pigments, IR absorbers, NIR absorbers, photochromic agents, mould-release agents, optical brighteners, polytetrafluoroethylene, halogen-free flame retardants, natural layer silicates, synthetic layer silicates, fillers with a relative permittivity of at most 3.5, e.g. chalk or talc, nanoscale fillers with a particle size of at most 100 nm.

12. Polyamide moulding compound according to one of the preceding claims, **characterised in that** the moulding compound has a weld line strength, determined according to EN ISO 178 (2010), of at least 200 MPa and preferably of at least 250 MPa.

13. Polyamide moulding compound according to one of the preceding claims, **characterised in that** component (A) consists only of components Aa) and Ab), and/or
the polyamide moulding compound consists only of components (A), (B) and (C).

14. Moulded article which comprises a polyamide moulding compound according to one of claims 1 to 13 and which preferably consists of this polyamide moulding compound.

15. Moulded article according to claim 14, **characterised in that** the moulded article concerns components, housings or housing parts of devices which communicate with electromagnetic waves at a frequency of 0.3 to 300 GHz.

16. Moulded article according to claim 15, **characterised in that** the moulded article is selected from the group consisting of components, housings or housing parts of transmitting- and receiving devices, mobile phones, tablets, laptops, navigational devices, monitoring cameras, photographic cameras, sensors, diving computers, audio units, remote controls, loudspeakers, headphones, radio sets, television sets, household appliances, kitchen appliances, door- or gate openers, operating devices for the central locking in vehicles, keyless-go vehicle keys, temperature measuring- or temperature display devices, measuring devices and control devices.

## Revendications

1. Mélange à mouler de polyamides contenant les composants suivants :
(A) 25 à 80 % en poids d'un mélange de
Aa) 50,1 à 90 % en poids d'au moins un polyamide aliphatique partiellement cristallin choisi dans le groupe consistant en PA 10, PA 11, PA 12, PA 516, PA 610, PA 612, PA 614, PA 616, PA 618, PA 1012, PA 1014, PA 1016, PA 1018 et les mélanges de ceux-ci, et
Ab) 10 à 49,9 % en poids d'au moins un polyamide amorphe ou microcristallin, la somme des proportions des composants Aa) et Ab) de 100 % en poids, et le mélange des composants Aa) et Ab) présentant en moyenne au moins 5,7 atomes de carbone ne participant pas au groupe amide, par groupe amide du mélange (A),
(B) 20 à 65 % en poids d'au moins une charge vitreuse, constituée de verre ayant une teneur en oxydes de métaux alcalins et en oxydes de métaux alcalino-terreux de 0 à 12 % en poids par rapport à la composition du verre, choisie dans un groupe consistant en les fibres, les fibres broyées, les particules, les flocons, les billes et les mélanges de ceux-ci
et
(C) 0 à 10 % en poids d'additifs,
la somme des composants (A), (B) et (C) faisant 100 % en poids, et
le mélange à mouler de polyamides présentant une permittivité relative non supérieure à 3,5 à 2,45 GHz, la mesure de la perméabilité relative εᵣ ayant été effectuée selon CEI 61189-2-721 (2015) sur des plaques de 80 x 80 x 3 mm à 23°C.

2. Mélange à mouler de polyamides selon la revendication 1, **caractérisé en ce que** le gauchissement n'est pas supérieur à 0,5 %, de préférence n'est pas supérieur à 0,4 % et d'une manière particulièrement préférée n'est pas supérieur à 0,3 %, la détermination ayant été effectuée selon ISO 294-3 (2002) sur des plaques du type D2 de dimensions 60 x 60 x 2 mm.

3. Mélange à mouler de polyamides selon la revendication 1 ou 2, **caractérisé en ce que** le mélange des composants Aa) et Ab) présente au moins 6,5, de préférence 8,5 et d'une manière particulièrement préférée 10,0 d'atomes de carbone ne participant pas au groupe amide, par groupe amide du mélange.

4. Mélange à mouler de polyamides selon l'une des revendications précédentes, **caractérisé en ce que** l'au moins un polyamide aliphatique partiellement cristallin Aa) est choisi dans le groupe consistant en PA 10, PA 11, PA 12, PA 516, PA 612, PA 616, PA 1012, PA 1016 et leurs mélanges.

5. Mélange à mouler de polyamides selon l'une des revendications précédentes, **caractérisé en ce que** l'au moins un polyamide amorphe ou microcristallin Ab) est choisi dans le groupe consistant en PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA PACMT12, PA 6I/MACMI/MACMT, PA MACM/MACMT/12, PA MACMI/MACMT/MACM12, PA MACMI/MACMT/MACM12/12, PA 6I/6T/MACMI/MACMT/12, PA 61/6T/MACMI, PA MACMI/MACM36, PA MACMT/MACM36, PA MACMI/MACM12, PA MACMT/MACM12, PA MACM6/11, PA MACM 10/10, PA MACM12/PACM12, PA MACM6/11, PAMACM10/10, PA MACM12/PACM12, PA MACM14/PACM14, PA MACM18/PACM18 et les mélanges de ceux-ci ; PA 6I/6T, PA MACM12, PA MACM14, PA TMDC12, PA TMDC14, PA MACMI/12, PA 61/6T/MACMI/MACMT, PA MACMI/MACMT/12, PA MACMI/MACMT/MACM12, PA 6I/6T/MACMI/MACMT/12, PA MACM10/10, PA MACM12/PACM12, PA MACM 14/PACM 14, PA MACM 18/PACM 18 et les mélanges de ceux-ci étant préférés ; PA 6I/6T, PA MACM12, PA MACMI/12, PA MACMI/MACMT/12, PA MACMI/MACMT/MACM12, PA MACM12/PACM12 et les mélanges de ceux-ci étant particulièrement préférés.

6. Mélange à mouler de polyamides selon l'une des revendications précédentes, **caractérisé en ce que** le polyamide amorphe ou microcristallin Ab) présente une température de transition vitreuse d'au moins 120 °C, de préférence d'au moins 140 °C, d'une manière particulièrement préférée d'au moins 155°C et tout spécialement d'au moins 180°C, la détermination selon ISO 11357-2 et -3 (2013) étant effectuée sur granulés.

7. Mélange à mouler de polyamides selon l'une des revendications précédentes, **caractérisé en ce que** la proportion du polyamide partiellement cristallin Aa) dans le composant (A) est de 60 à 85 % en poids et de préférence de 65 à 80 % en poids.

8. Mélange à mouler de polyamides selon l'une des revendications précédentes, **caractérisé en ce que** la proportion du polyamide amorphe ou microcristallin Ab) dans le composant (A) est de 15 à 40 % en poids et de préférence de 20 à 35 % en poids.

9. Mélange à mouler de polyamides selon l'une des revendications précédentes, **caractérisé en ce que** la proportion des composants (A) dans le mélange à mouler de polyamides est de 34,9 à 69,9 % en poids, de préférence de 39,7 à 59,7 % en poids et d'une manière particulièrement préférée de 44,5 à 54,4 % en poids, par rapport au poids total du mélange à mouler de polyamides, et/ou
la proportion du composant (B) dans le mélange à mouler de polyamides est de 30 à 65 % en poids, de préférence de 40 à 60 % en poids et d'une manière particulièrement préférée de 45 à 55 % en poids par rapport au poids total du mélange à mouler de polyamides, et/ou
la proportion des composants (C) dans le mélange à mouler de polyamides est de 0,1 à 8 % en poids, de préférence de 0,3 à 6 % en poids et d'une manière particulièrement préférée de 0,5 à 5 % en poids par rapport au poids total du mélange à mouler de polyamides.

10. Mélange à mouler de polyamides selon l'une des revendications précédentes, **caractérisé en ce que** la charge vitreuse est constituée de verre ayant une teneur en oxydes de métaux alcalins et en oxydes de métaux alcalino-terreux de 0 à 10 % en poids, de préférence de 0 à 8 % en poids, d'une manière particulièrement préférée de 0 à 6 % en poids, par rapport à la composition du verre.

11. Mélange à mouler de polyamides selon l'une des revendications précédentes, **caractérisé en ce que** le mélange à mouler de polyamides contient au moins un additif, choisi en particulier dans le groupe consistant en les stabilisants inorganiques et organiques, en particulier les antioxydants, les antiozonants, les agents de protection contre la lumière, les stabilisants UV, les absorbants UV ou les agents bloquant les UV, les agents de glissement, les agents de démoulage, les lubrifiants de démoulage, les additifs prolongateurs de chaîne, les colorants, les agents de marquage, les pigments inorganiques, les pigments organiques, les absorbants IR, les absorbants NIR, les agents photochromes, les agents de démoulage, les azurants optiques, le polytétrafluoréthylène, les agents d'ignifugation non halogénés, les phyllosilicates naturels, les phyllosilicates synthétiques, les charges ayant une permittivité relative au maximum de 3,5, par exemple la craie ou le talc, les charges nanométriques ayant une granulométrie au maximum de 100 nm.

12. Mélange à mouler de polyamides selon l'une des revendications précédentes, **caractérisé en ce que** le mélange à mouler présente une résistance des joints sur pièces moulées selon EN ISO 178 (2010) d'au moins 200 MPa et de préférence d'au moins 250 MPa.

13. Mélange à mouler de polyamides selon l'une des revendications précédentes, **caractérisé en ce que** le composant (A) n'est constitué que des composants Aa) et Ab), et/ou
le mélange à mouler de polyamides n'est constitué que des composants (A), (B) et (C).

14. Objet moulé qui contient un mélange à mouler de polyamides selon l'une des revendications 1 à 13 et qui de préférence est constitué de ce mélange à mouler de polyamides.

15. Objet moulé selon la revendication 14, **caractérisé en ce que**, pour ce qui concerne l'objet moulé, il s'agit de composants, de boîtiers ou de parties de boîtier d'appareils qui communiquent avec des ondes électromagnétiques ayant une fréquence de 0,3 à 300 GHz.

16. Objet moulé selon la revendication 15, **caractérisé en ce que** l'objet moulé est choisi dans le groupe consistant en les composants, les boîtiers ou parties de boîtier d'appareils émetteurs et récepteurs, les téléphones mobiles, les tablettes, les ordinateurs portables, les appareils de navigation, les caméras de surveillance, les appareils photo, les capteurs, les ordinateurs de plongée, les installations audio, les télécommandes, les haut-parleurs, les écouteurs, les appareils radio, les appareils de télévision, les appareils ménagers, les équipements de cuisine, les systèmes d'ouverture pour portes ou portails, les unités de commande pour le verrouillage central de véhicules, des systèmes de verrouillage de véhicules Keyless-go, les appareils de mesure ou d'affichage de la température, les appareils de mesure et les appareils de commande.
